# FASCICULE DE BREVET EUROPEEN

(11) **EP 2 646 227 B1**
(45) Date de publication et mention de la délivrance du brevet: **07.01.2015**
(21) Numéro de dépôt: 11785028.9
(22) Date de dépôt: 22.11.2011
(51) Int. Cl.: B29C 70/54, B29C 70/88, B29C 70/64, B29D 30/66, B29D 30/06

(54) **DISPOSITIF ET PROCÉDÉ D'IMPLANTATION DE FILS DANS UN PROFILE EN CAOUTCHOUC COMPRENANT UNE AIGUILLE ROTATIVE A POINTE EMOUSSEE**
VORRICHTUNG UND VERFAHREN ZUM EINBETTEN VON LAUFFLÄCHEN IN EIN KAUTSCHUKPROFILELEMENT MIT ROTIERENDER NADEL MIT STUMPFER SPITZE
DEVICE AND PROCESS FOR EMBEDDING THREADS IN A RUBBER PROFILED ELEMENT COMPRISING A BLUNT-TIPPED ROTARY NEEDLE

(30) Priorité: 02.12.2010 FR 1060017
(43) Date de publication de la demande: 09.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DETTORE, Jean-Marie, F-63040 Clermont-Ferrand cedex 9 (FR)
(74) Mandataire: Lasson, Cédric Y. M.
(86) Numéro de dépôt international: PCT/EP2011/070619
(87) Numéro de publication internationale: WO 2012/072443

(56) Documents cités:
- EP-A2- 1 213 130
- EP-A2- 1 213 383
- WO-A1-2006/069912
- US-A- 5 158 027
- US-A- 5 186 776
- US-A- 5 642 679

## Description

L'invention concerne le domaine technique des pneumatiques pour véhicules, et en particulier celui de la fabrication des pneumatiques comportant des fibres injectées selon une direction donnée dans un des composants en caoutchouc formant ledit pneumatique.

La publication EP 1 213 130 donne une idée précise de ce type de pneumatique, dans lequel des fibres de renforcement de faible longueur, ou inserts, sont implantées de manière orientée dans la bande de roulement, afin d'améliorer les propriétés mécaniques de cette partie du pneumatique selon une direction donnée.

La publication EP 1 213-383 propose un moyen permettant d'implanter les dits inserts dans un composant de caoutchouc destiné à être assemblé pour former un bandage de pneumatique.

Ce dispositif comporte une aiguille creuse apte à pénétrer dans le composant en caoutchouc, et à l'intérieur de laquelle circule la fibre de renforcement, un support mobile apte à effectuer un mouvement alternatif et supportant ladite aiguille, une lame de coupe pour séparer la fibre à implanter, et au moins deux moyens de serrage pour maintenir et régler le positionnement de la fibre. Ces moyens de serrage ont toutefois pour effet de mettre la fibre de renforcement en compression.

D'autres procédés et dispositifs destinés à l'implementation de fils dans des matériaux composites sont décrits dans les publications US 5,186,776 et US 5,642,679.

La demande, PCT/EP2010/062907 publiée le 10.03.2011 sous le numéro WO 2011/02619 A1 décrit un appareil et une méthode permettant de s'affranchir de ce problème de mise en compression.

Ce dispositif d'implantation d'un insert dans un profilé de caoutchouc selon une direction donnée comprend :
- un moyen d'alimentation du fil en continu
- un support mobile apte à se mouvoir sur un bâti selon un mouvement alternatif rectiligne entre une position relevée et une position abaissée,
- une aiguille creuse comportant un canal à l'iniérieur duquel ledit fil est apte à circuler, fixée par l'une de ses extrémité à la base du support mobile, et comportant à son autre extrémité une pointe apte à pénétrer dans ledit profilé en caoutchouc,
- un moyen de coupe disposé sur le bâti, comportant une lame apte à sectionner le fil à chaque cycle du mouvement alternatif de l'aiguille, lorsque ladite pointe est en position relevée, de manière à libérer une longueur de fil donnée constituant une amorce en sortie de l'aiguille.

Toujours selon cette publication, il est décrit un procédé de mise en oeuvre du dispositif qui comprend les étapes suivantes :
A - lorsque l'aiguille est en position relevée au dessus de la surface du profilé,
on libère une longueur de fil donnée du coté de la pointe de ladite aiguille de sorte à constituer une amorce,
B - on abaisse l'aiguille de manière à faire pénétrer la pointe de ladite aiguille dans le profilé sur une profondeur donnée,
C -on extrait l'aiguille du profilé en autorisant la circulation du fil à l'intérieur de l'aiguille,
D - on relève la pointe de l'aiguille d'une hauteur donnée au dessus de la surface du profilé, de manière à libérer une longueur de fil entre la pointe de l'aiguille et la surface du profilé.
E - on sectionne le fil au niveau de la surface du profilé de manière à libérer une nouvelle amorce de longueur donnée.

A chaque cycle, l'amorce située en dehors de l'aiguille du coté de la pointe est entraînée dans le profilé. Lors de la remontée de l'aiguille l'amorce est maintenue en position dans le fond de la perforation réalisée dans le matériau caoutchoutique qui l'enserre, et qui bloque la remontée du fil contenu dans l'aiguille, de sorte que le mouvement de remontée permet de faire circuler le fil à l'intérieur de l'aiguille.

Pendant ce mouvement, la portion de fil comprise entre l'entrée de l'aiguille et l'amorce est maintenue en traction. Le fil est tiré dans l'aiguille et non plus poussé comme cela est proposé dans l'appareil faisant l'objet de la publication EP 1 213 383.

Toutefois on observe que, pour faire pénétrer l'aiguille dans le profilé de caoutchouc, il est nécessaire de développer des efforts importants qui ne sont pas sans conséquence sur le dimensionnement de l'aiguille et de la mécanique à mettre en oeuvre pour animer son mouvement alternatif. Ces efforts ont pour effet de déformer la surface du profilé au niveau du point de pénétration de l'aiguille, et peuvent de surcroît provoquer la casse de l'aiguille, en particulier lorsque l'angle de pénétration de l'aiguille dans le profilé est inférieur à 90°.

L'invention, qui est un perfectionnement du dispositif et de la méthode décrits dans la demande PCT/EP2010/062907, a pour objet d'apporter une solution originale au dispositif tel que décrit dans cette demande.

Il est apparu, au cours d'une démarche expérimentale, que la mise en rotation de l'aiguille à haute vitesse, permettait de réduire considérablement ces efforts.

Toutefois, pour que la rotation de l'aiguille ne conduise pas au sectionnement de la partie de l'amorce en contact avec le bord de la pointe, d'une part, et pour s'affranchir de l'entraînement en rotation du fil d'autre part, il a été mis en évidence qu'en émoussant de manière contrôlée le profil de la pointe, ladite pointe en rotation pouvait alors glisser librement sur le fil, sans sectionner le fil et sans altérer la capacité de pénétration de l'aiguille dans le profilé.

Pour atteindre cette performance, il est nécessaire d'adapter le profil géométrique de la pointe de manière à éviter tout effet tranchant et tout effet d'entraînement. Le profil de la pointe se définit de telle manière que, en découpant un profil radial quelconque de ladite pointe en segments de 0,01 mm de longueur, la tangente en un point quelconque d'un segment donné fait un angle inférieur à 20° avec la tangente en un autre point quelconque dudit segment, et en un point quelconque des deux segments adjacents au segment donné considéré.

La description qui suit, et qui a pour objet de mettre en lumière les détails de l'invention, s'appuie sur un exemple de réalisation du dispositif, et sur les figures 1 à 5 dans lesquelles :
- la figure 1 représente une vue schématique du dispositif selon l'invention,
- les figures 2 et 3 représentent une vue de la pointe de l'aiguille,
- la figure 4 représente les différentes phases du cycle d'implantation d'un insert selon un premier mode d'utilisation du dispositif,
- la figure 5 représente les différentes phases du cycle d'implantation d'un insert selon un deuxième mode d'utilisation du dispositif,

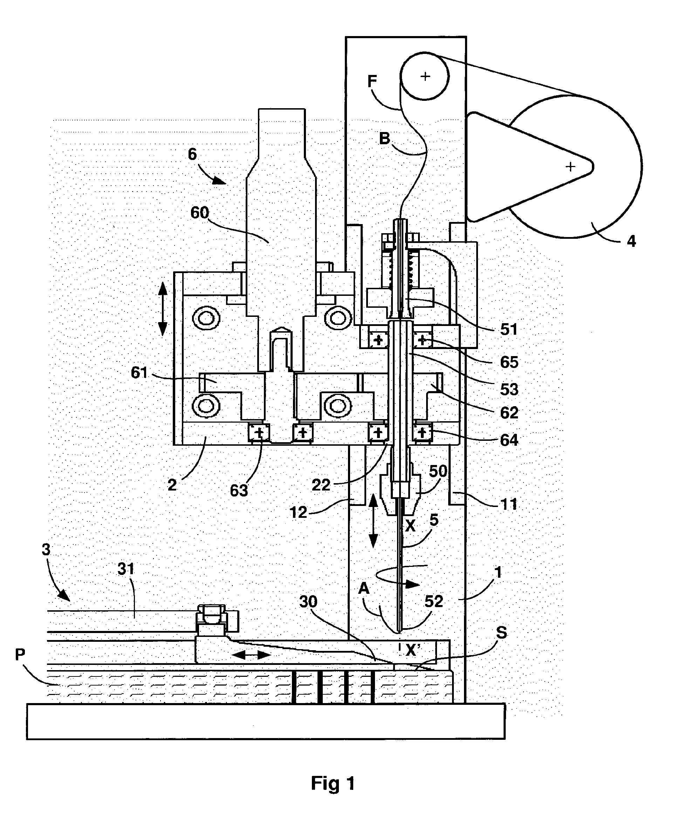

Le dispositif selon l'invention illustré à la figure 1 comprend un bâti 1 sur lequel sont montés un moyen d'alimentation 4 du fil F, un support mobile 2 supportant une aiguille creuse 5, et un moyen de coupe 3.

Le moyen d'alimentation 4, est placé en tête du bâti 1, et permet de délivrer le fil F à une vitesse constante donnée et régulée.

Le support mobile 2, est relié au bâti par l'intermédiaire de rails de guidage rectilignes 11 et 12. Ce support mobile 2 est animé d'un mouvement alternatif entre une position relevée et une position basse, par une biellette et un vilebrequin entraînés en rotation par un moteur (non visibles), solidaires du bâti 1 et disposés de l'autre coté de ce dernier.

On entend par position relevée la position du bâti correspondant à la phase du cycle au cours de laquelle le bâti est à la position la plus éloignée de la surface S du profilé P, et par position basse la position correspondant à la phase du cycle au cours de laquelle le bâti est à la position la plus proche de la surface S.

Une aiguille creuse 5, comportant un canal 53 dans lequel circule le fil F, est fixée à l'aide d'un mandrin 50 par une de ses extrémités à la base 22 du support mobile 2. La pointe de l'aiguille 52, de laquelle sort le fil F, est dirigée vers la surface S du profilé P. L'aiguille est solidaire du mouvement alternatif de monte et baisse du support 2.

Un moyen de coupe 3, comportant une lame 30, est fixé sur la partie inférieure du bâti 1. Sous l'action d'un bras 31 relié à un moteur (non représenté), la lame de coupe 30 effectue un mouvement alternatif dans une direction parallèle au plan formé par la surface S du profilé P, de manière à sectionner le fil au plus près de ladite surface S.

Selon les besoins, le moyen de coupe 3 peut être débrayable, de manière à permettre le fonctionnement du dispositif d'implantation selon un mode particulier, sans avoir à effectuer la coupe du fil à chaque cycle, comme cela sera exposé par la suite.

Les moyens 6 aptes à mettre en rotation l'aiguille autour de son axe longitudinal XX' sont montés sur le support mobile 2. Un moteur 60 entraîne en rotation une roue dentée 61, montée sur un palier 63. Cette roue dentée 61 est elle-même en prise avec un pignon denté 62 porté par un arbre creux 53, monté libre en rotation autour de son axe XX' par rapport au support mobile 2 par l'intermédiaire de deux paliers 64 et 65. L'arbre creux 53 supporte, à son extrémité placée à la base 22 du support mobile, le mandrin 50 sur lequel est fixée l'aiguille 5. La mise en rotation du moteur 61 entraîne la mise en rotation de l'aiguille 5.

La vitesse de rotation du moteur 61 est adaptée pour obtenir l'effet de perforation du matériau caoutchoutique désiré. On observe en effet que la rotation à haute vitesse de l'aiguille induit un échauffement de la couche d'élastomère immédiatement en contact avec la paroi externe de celle-ci. En raison des frottements entre l'aiguille et la gomme, la température des parois de l'aiguille et de ladite couche d'élastomère s'élèvent rapidement, ce qui a pour effet de réduire fortement la viscosité de cette mince couche d'élastomère, et de réduire en proportion les efforts de frottement de la paroi de l'aiguille sur les parois du canal pratiqué par l'aiguille dans le profilé de caoutchouc. Cet effet se produit de manière plus sensible au niveau de la pointe de l'aiguille, à l'endroit où le matériau est encore froid.

On observe également, pendant le fonctionnement en continu du dispositif, une stabilisation de la température de l'aiguille 5 qui ne fait qu'accentuer son efficacité à perforer.

Il résulte de la mise à profit de ce phénomène d'échauffement, que l'effet de perforation de l'aiguille n'est pas obtenu par l'affûtage de l'aiguille mais bien par la plastification du matériau en contact avec cette dernière.

Cet effet permet de résoudre les problèmes liés à l'exploitation des dispositifs de l'art antérieur dans lesquels l'aiguille n'est pas mise en rotation. Quand bien même ces aiguilles seraient couplées avec des moyens de chauffage aptes à leur transmettre une certaine quantité de chaleur, on observe que la température de ces aiguilles diminue au fur et à mesure de leur pénétration dans le matériau caoutchoutique froid, ce qui diminue immédiatement leur efficacité. L'aiguille est alors emprisonnée dans la gomme, et les efforts nécessaires pour la remonter déforment la géométrie du puit de pénétration de l'aiguille, et rendent aléatoire la position de l'insert dans la gomme.

Ce problème est résolu par le mécanisme selon l'invention dans lequel l'apport thermique est constant tout au long de la pénétration de l'aiguille dans le profilé.

La vitesse de rotation de l'aiguille est d'autant plus élevée que le diamètre de l'aiguille est faible. En pratique, le diamètre extérieur de l'aiguille est compris entre 0,7 mm et 3 mm et correspond aux diamètres des fils servant à réaliser les inserts.

Les premiers effets favorables se manifestent avec une vitesse de 5 000 t/min pour une aiguille de 1,5 mm de diamètre externe. Toutefois, pour ce type d'aiguille, la vitesse de fonctionnement donnant expérimentalement les meilleurs résultats est de l'ordre de 15 000 t/min. Pour une aiguille de 0,7 mm de diamètre, cette même vitesse optimale s'élève à 35 000t/min. Aussi, pour couvrir la gamme des besoins, les moyens de mise en rotation doivent idéalement permettre la mise en rotation de l'aiguille sur une gamme de vitesse allant de 5 000/min à 50 000t/min pour une utilisation courante comprise entre 10 000t/min et 35 000 t/min.

La mise en oeuvre de l'invention nécessite également de modifier de manière appropriée la forme de la pointe de l'aiguille 5. En effet, il convient de s'assurer que le bord 52 de la pointe ne sectionne pas le fil lors de la mise en rotation de l'aiguille, ce qui aurait pour effet de séparer l'amorce A du reste du fil, et réduirait alors à néant la fonction de cette dernière qui est, comme cela a déjà été dit ci-dessus, de maintenir le fil en traction lors de l'extraction de l'aiguille du profilé.

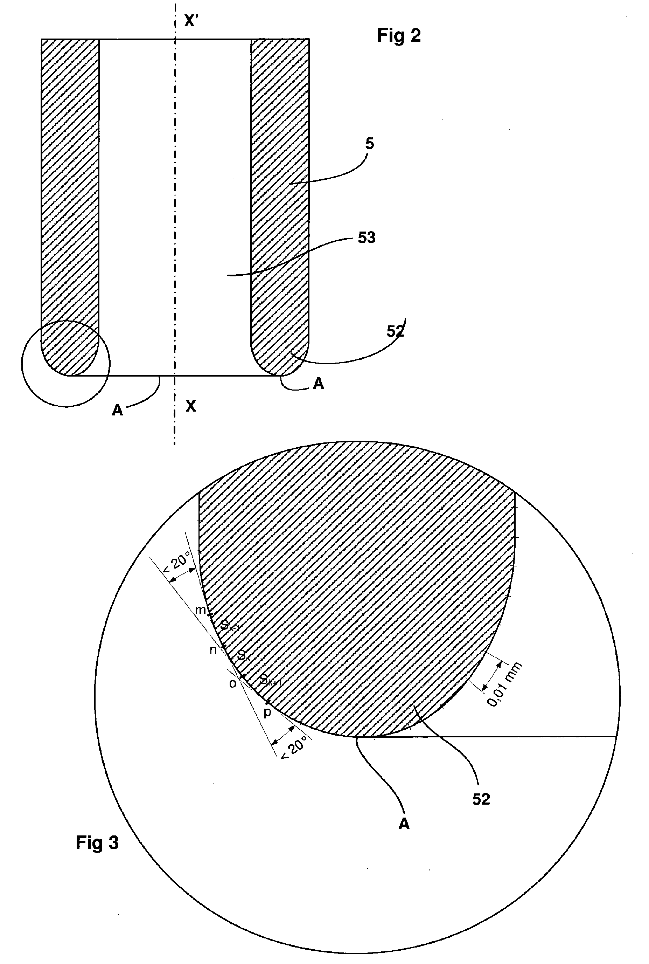

La pointe 52 de l'aiguille est alors émoussée, comme cela est illustré à la figure 3, selon une règle définie pour convenir à la plupart des fils retenus pour servir d'insert.

Cette règle, qui a pour objet d'éviter les arêtes tranchantes, a été obtenue expérimentalement et se comprend aisément en s'appuyant sur la figure 3 qui est un grossissement de la coupe radiale de la pointe mise en médaillon à la figure 2.

Pour définir la forme acceptable de ce profil radial, on découpe ledit profil en segments sensiblement égaux, de 0,01 mm de longueur, en progressant depuis la paroi du conduit intérieur 53, jusqu'à la paroi extérieure de l'aiguille.

On s'assure alors que, pour un segment quelconque donné Sₖ, la tangente en un point quelconque de ce segment Sₖ, fait un angle inférieur à 20°, avec la tangente en un autre point quelconque de ce segment Sₖ.

De plus, la tangente en un point quelconque de ce segment Sₖ, fait un angle inférieur à 20° avec la tangente en un point quelconque des segments adjacents Sₖ₋₁ et Sₖ₊₁ au segment Sₖ donné considéré.

Dans l'exemple de la figure 3, les segments Sₖ₋₁, Sₖ et Sₖ₊₁ sont délimités respectivement par les points m, n, o, et p. Ainsi en considérant le segment Sₖ, et le segment Sₖ₋₁, les tangentes aux points o et m forment entre elles un angle inférieur à 20°, et en considérant toujours le segment Sₖ, et le segment Sₖ₊₁, les tangentes au point n et au point p forment entre elles un angle inférieur à 20°.

De la sorte, et selon la règle ci-dessus, la forme du profil n'est pas limitée au profil curviligne uniformément concave représenté aux figures 2 et 3, et peut comprendre des segments rectilignes formant entre eux des angles inférieurs à 20° éventuellement combinés avec des segments ayant des profils concaves mais aussi convexes.

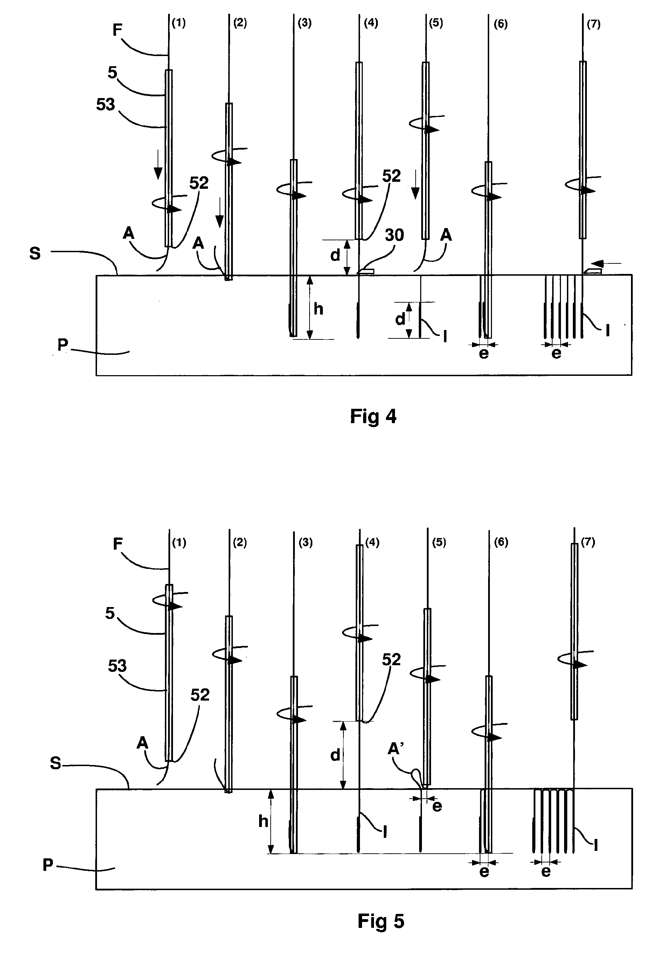

Les principales positions du cycle d'animation du dispositif selon l'invention sont détaillées dans la figure 4, et sont repérées par les chiffres (1) à (6) placés entre parenthèses. Chaque cycle correspond à l'implantation d'un insert I dans le profilé P.

La première position (1) correspond à la position relevée de l'aiguille 5 au départ de son mouvement en direction de la position basse. On observe que l'extrémité libre du fil F dépasse de la pointe de l'aiguille 52 pour former une amorce A.

La longueur de l'amorce A ne doit pas être trop courte de manière à ce que les effets attendus lors de la remontée de l'aiguille se produisent. En pratique on considèrera, pour les fils textiles usuellement employés dans l'industrie du pneumatique que la longueur de l'amorce peut utilement être supérieure à 2 mm et de préférence comprise entre 3 mm et 5 mm.

La deuxième position (2) correspond au mouvement de descente de l'aiguille 5 et au moment où la pointe de l'aiguille perce la surface S du profilé en caoutchouc P.

On observe qu'à cet instant précis, l'amorce A se replie le long de l'aiguille 5. Dans cette configuration, le fil est bloqué entre la surface externe de l'aiguille et la perforation pratiquée dans le profilé caoutchoutique, privant le fil de tout mouvement dans la direction opposée au sens de progression de l'aiguille.

La troisième position (3) correspond à la position basse de l'aiguille, dans laquelle la pointe de l'aiguille pénètre dans le profilé à une profondeur h donnée,

L'aiguille amorce alors un mouvement de remontée de sa position basse vers sa position haute, illustré à la position (4). La position relevée est atteinte lorsque la pointe de l'aiguille est distante d'une distance d donnée et réglable de la surface S du profilé P.

Pendant ce mouvement de remontée, la partie libre du fil et de l'amorce A sont enserrées par le matériau caoutchoutique du profilé, autorisant la mise en tension du fil F, et l'aiguille remonte le long du fil qui demeure fixe par rapport à la surface S du profilé P.

Au moment où la position relevée est atteinte, la lame 30 sectionne le fil au plus près de la surface S, et libère une amorce A disponible pour l'implantation de l'insert I suivant, comme cela est illustré par la position (5).

Le réglage de la longueur d, qui détermine la longueur de l'amorce A, se fait en réglant la limite de course du support mobile 2 lorsque de dernier est en position relevée. Le réglage de la profondeur h se fait en modifiant l'amplitude du mouvement du support mobile 2, et en réglant la limite de course de la position basse. L'amplitude de la course du support mobile correspond à la profondeur h augmentée de la longueur d.

Lors du sectionnement de l'amorce, le fil F reçoit une impulsion transversale de la part de la lame 30 du couteau 3, ayant pour effet de forcer l'extrémité libre du fil constituant l'amorce à se replier autour de la pointe 52.

Ce mouvement de repli de l'amorce autour de la pointe 52 est suffisant pour bloquer le mouvement, sous l'effet de l'inertie, de remontée du fil à l'intérieur de l'aiguille, lors du déplacement de l'aiguille entre la position haute illustrée en (5) et la position dans laquelle la pointe pénètre à nouveau dans la surface S du profilé P et illustrée en (2).

De manière à éviter la remontée du fil, on s'arrange également pour que la tension du fil à l'entrée du conduit 25 de l'aiguille soit nulle, en pilotant le moyen d'alimentation 4 de manière à ce que la portion de fil comprise entre le moyen d'alimentation 4 disposé sur le bâti 1, et l'entrée de l'arbre creux 53, fasse une boucle B quelle que soit la position du support mobile 2, comme cela est illustré à la figure 1.

Pendant toute la durée du cycle, l'aiguille est mise en rotation par le moteur 60. Lorsque l'aiguille est en position haute et que l'extrémité du fil n'est pas retenue par le matériau caoutchoutique, l'aiguille 5 et l'arbre creux 53 tournent autour du fil F, sans que ce dernier ne soit entraîné en rotation. Pour éviter que le fil ne soit embarqué par les frottements du fil sur l'extrémité de la pointe on peut utilement faire en sorte que la ligne A formée par l'arête de la pointe 52 soit disposée sensiblement dans un plan perpendiculaire à l'axe XX' de l'aiguille 5. On évite ainsi toutes les aspérités susceptibles d'emporter le fil et de provoquer l'enroulage intempestif du fil autour de l'aiguille.

Au moment de la pénétration de l'aiguille dans le profilé, l'amorce est bloquée en rotation par la surface du canal formé par l'aiguille. Le bord inférieur de l'aiguille autour duquel l'amorce est repliée glisse sur le fil sans le sectionner, et l'amorce est entraînée dans le profilé jusqu'à la profondeur h. Lors de la remontée de l'aiguille, le fil est retenu par l'amorce au fond du puit formé par l'aiguille, et ladite aiguille remonte en tournant autour du fil sans altérer les propriétés de ce dernier.

Pour améliorer la remontée de l'aiguille, il est possible de placer sur le bâti 2 un moyen 51 de blocage du fil en amont de l'arbre creux 53 de manière à interdire la remontée du fil en cas de mise en tension intempestive de la partie de fil comprise entre l'entrée du fil dans l'arbre creux 53 et le moyen d'alimentation 4. Ce moyen de blocage s'avère également utile lorsque la rigidité du fil à implanter est importante, et que le fil est apte à supporter une certaine résistance au flambement lorsqu'il est soumis à une compression. Dans ce cas de figure, lorsque l'extrémité du fil du fil vient en contact avec la surface du profilé, le fil ne peut pas remonter le long de l'aiguille et le mouvement de l'aiguille impose le repli de l'amorce autour de la pointe 52 avant que cette dernière ne pénètre dans le profilé ;

L'implantation de l'insert I suivant se fait en déplaçant le profilé d'un pas e relativement au bâti 1, comme cela est illustré par la position (6), puis en reproduisant le cycle qui vient d'être décrit.

En répétant ces opérations autant de fois que nécessaire, on obtient un profilé de caoutchouc dans lequel des inserts I sont implantés de façon régulière, tel que cela est représenté à la position (7).

L'insert, de longueur h, comporte à sa base un repli de longueur d correspondant à l'amorce A. La présence d'une double longueur de fil à la base de l'insert présente l'avantage de renforcer de manière préférentielle la base des éléments de sculpture.

Le cycle faisant l'objet de la présente description illustre le cas dans lequel les inserts sont implantés perpendiculairement à la surface S du profilé P. Cette disposition n'est pas limitative, et il est tout à fait possible de prévoir un dispositif comportant des moyens d'inclinaison de la direction XX' de l'aiguille par rapport au bâti et au plan de la surface S du profilé P.

La figure 5 illustre un exemple particulier de mise en oeuvre du dispositif selon l'invention qui peut s'avérer intéressant lorsque l'on cherche à augmenter la vitesse d'implantation.

Dans cette configuration, on s'affranchit de la coupe du fil à chaque cycle de l'aiguille et on neutralise le moyen de coupe.

Pour démarrer le cycle d'implantation il convient comme précédemment de libérer une amorce A ainsi que cela est illustré à l'étape (1).

L'aiguille pénètre dans le profilé P (étape (2)) jusqu'à une profondeur h (étape (3)).

A l'étape (4) l'aiguille remonte alors jusqu'à la position relevée dans laquelle la pointe de l'aiguille est distante d'une distance d de la surface S du profilé P.

Le profilé est déplacé d'un pas e par rapport au bâti 1 et l'aiguille recommence son cycle.

Il suffit alors de s'assurer que la distance d soit sensiblement supérieure ou égale à la profondeur h augmentée du pas e pour libérer une boucle A' faisant office d'amorce lors de l'implantation de l'insert suivant comme cela est illustré à l'étape (5).

L'implantation des inserts successifs se fait en reproduisant le cycle d'implantation autant de fois que nécessaire comme cela est illustré par les étapes (6) et (7).

Selon ce deuxième mode de réalisation, les inserts comprennent deux brins de fils pliés à la base de l'insert, et deux inserts successifs sont reliés entre eux par un brin de longueur e.

La description du dispositif de mise en oeuvre de l'invention qui précède s'applique à un dispositif comprenant une seule aiguille. Mais on comprendra aisément que les principes décrits ici sont applicables à un dispositif comprenant une pluralité d'aiguilles disposées sur un même support mobile effectuant ledit mouvement alternatif et qui sont reliées chacune à un moyen d'alimentation du fil en continu.

Cet arrangement particulier permet d'effectuer l'implantation de plusieurs inserts à chaque cycle du support mobile et de mutualiser les moyens d'entraînement et les moyens de coupe. La roue dentée 61 peut être remplacée par une courroie dentée apte à entraîner l'ensemble des pignons dentés 62 portés par les arbres creux 53 supportant chacun une aiguille 5 par l'intermédiaire d'un mandrin 50. Et la lame du moyen de coupe 3 est élargie en conséquence de manière à sectionner l'ensemble des fils à chaque cycle.

## Revendications

1. Dispositif d'implantation d'un insert (I) dans un profilé (P) en caoutchouc selon une direction donnée comprenant :
- au moins un moyen d'alimentation (4) d'un fil (F) en continu
- un support mobile (2) apte à se mouvoir sur un bâti (1) selon un mouvement alternatif rectiligne entre une position relevée et une position abaissée,
- au moins une aiguille (5) creuse comportant un canal (53) d'axe longitudinal XX' à l'intérieur duquel le fil (F) est apte à circuler, fixée par l'une de ses extrémité (51) à la base (22) du support mobile (2) et comportant à son autre extrémité une pointe (52) apte à pénétrer dans ledit profilé (P) en caoutchouc,
- un moyen de coupe (3) disposé sur le bâti (1), comportant une lame (30) apte à sectionner le fil (F) sortant de la pointe (52) de l'aiguille à chaque cycle du mouvement alternatif de l'aiguille, lorsque ladite pointe (52) est en position relevée de manière à libérer une longueur de fil donnée constituant une amorce (A) en sortie de l'aiguille.
**caractérisé en ce que** le support mobile comprend des moyens (6) aptes à mettre l'aiguille en rotation autour de son axe longitudinal XX', et **en ce que** la pointe (52) de ladite aiguille est émoussée de sorte que, en découpant un profil radial quelconque de ladite pointe en segments de 0,01 mm de longueur, la tangente en un point quelconque d'un segment (Sₖ) donné, fait un angle inférieur à 20° avec la tangente en un autre point quelconque dudit segment (Sₖ) et en un point quelconque des segments adjacents (Sₖ₋₁, Sₖ₊₁) au segment donné (Sₖ) considéré.

2. Dispositif selon la revendication 1, dans lequel la ligne formant l'arête (A) de la pointe (52) est disposée sensiblement dans un plan perpendiculaire à l'axe (XX') de l'aiguille (5).

3. Dispositif selon la revendication 1 ou 2, dans lequel les moyens de mise en rotation (6) de l'aiguille sont aptes à mettre ladite aiguille en rotation à une vitesse comprise entre 5000 tour/min et 50 000 tour/min et usuellement comprise entre 10 000t/min et 35 000 t/min

4. Dispositif selon l'une des revendications 1 à 3, dans lequel le diamètre extérieur de l'aiguille est compris entre 0,7 mm et 3 mm.

5. Dispositif selon l'une des revendications 1 à 4, dans lequel le moyen de coupe (3) est un couteau (30) à mouvement alternatif se déplaçant dans un plan.

6. Dispositif selon l'une des revendications 1 à 5, dans lequel le moyen de coupe (3) est débrayable.

7. Dispositif selon l'une des revendications 1 à 6, dans lequel l'aiguille est associée à un moyen de blocage (51) du fil (F) disposé sur le support mobile (2) et apte à interdire la circulation du fil (F) dans l'aiguille (5) dans un sens opposé au sens d'alimentation.

8. Dispositif selon l'une des revendications 1 à 7 dans lequel le moyen d'alimentation (4) est relié à un moyen de régulation apte à maintenir la portion de fil située entre ledit moyen d'alimentation et l'entrée dans le canal de l'aiguille à une tension nulle quelle que soit la position du support mobile (2).

9. Dispositif selon l'une des revendications 1 à 8, comportant des moyens d'inclinaison de la direction (XX') de l'aiguille (5) par rapport au bâti (1).

10. Dispositif d'implantation d'un fil (F) ou de plusieurs fils dans un profilé (P) en caoutchouc selon une direction donnée comprenant
- un support mobile (2) apte à se mouvoir sur un bâti (1) selon un mouvement alternatif rectiligne entre une position relevée et une position abaissée,
- une pluralité d'aiguilles (5) creuses comportant un canal (53) d'axe longitudinal XX' à l'intérieur duquel un fil (F) est apte à circuler, fixées chacune par l'une de leurs extrémités (51) à la base (22) du support mobile (2) et comportant à l'autre extrémité une pointe (52) apte à pénétrer dans ledit profilé (P) en caoutchouc,
- une pluralité de moyens d'alimentation (4) en fil (F) aptes à alimenter chaque aiguille en continu
- un moyen de coupe (3) disposé sur le bâti (1), comportant une lame (30) apte à sectionner les fils (F) sortant de la pointe (52) de chacune des aiguilles à chaque cycle du mouvement alternatif, de manière à libérer une longueur de fil donnée constituant une amorce (A) en sortie de chacune des aiguilles.
**caractérisé en ce que** le support mobile comprend des moyens (6) aptes à mettre les aiguilles en rotation chacune autour de son axe longitudinal XX', et **en ce que** la pointe (52) de chacune des aiguilles est émoussée de sorte que, en découpant un profil radial quelconque de ladite pointe en segments de 0,01 mm de longueur, la tangente en un point quelconque d'un segment (Sₖ) donné, fait un angle inférieur à 20° avec la tangente en un point quelconque des segments adjacents (Sₖ₋₁, Sₖ₊₁) au segment donné (Sₖ) considéré.

11. Procédé d'implantation d'un insert (I) formé d'un tronçon de fil dans un profilé (P) en caoutchouc par une de ses surface (S), à l'aide d'un dispositif selon l'une des revendications 1 à 10 comprenant une ou plusieurs aiguilles, dans lequel chacune des aiguilles décrit les étapes au cours desquelles :
A - lorsque l'aiguille est en position relevée au dessus de la surface (S) du profilé (P), on libère une longueur de fil donnée du coté de la pointe (52) de manière à constituer une amorce (A),
B - on abaisse la pointe (52) de l'aiguille (5) de manière à faire pénétrer la pointe (52) de ladite aiguille (5) dans le profilé (P) sur une profondeur (h) donnée supérieure à la longueur de l'amorce
C - on extrait l'aiguille (5) du profilé (P) en autorisant la circulation du fil (F) à l'intérieur de l'aiguille,
D - on relève la pointe (52) de l'aiguille (5) d'une hauteur (d) donnée au dessus de la surface (S) du profilé (P), de manière à libérer une longueur (d) de fil entre la pointe de l'aiguille (52) et la surface (S) du profilé (P).
E - on sectionne le fil au niveau de la surface (S) du profilé (P) à l'aide d'un moyen de coupe (3), de manière à libérer une nouvelle amorce (A) de longueur donnée (d).
**caractérisé en ce que** l'aiguille est mise en rotation autour de son axe longitudinal.

12. Procédé selon la revendication 11 dans lequel l'aiguille est mise en rotation à une vitesse comprise entre 5000 tour/min et 50 000 tour/min.

13. Procédé selon la revendication 11 ou 12 dans lequel, à l'issue de l'étape E :
F - on déplace d'un pas donné (e) le profilé (P) par rapport au bâti de manière à réaliser l'implantation d'un autre insert (I).

14. Procédé selon la revendication 13 dans lequel on neutralise le moyen de coupe de manière à supprimer l'étape E, et dans lequel on relève la pointe de l'aiguille au dessus de la surface (S) du profilé en caoutchouc (P) d'une hauteur (d) sensiblement égale à la profondeur (h), augmentée de la longueur du pas (e), de manière à former une nouvelle amorce (A').

## Patentansprüche

1. Vorrichtung zum Einführen einer Einlage (I) in ein Profilteil (P) aus Kautschuk gemäß einer gegebenen Richtung, die enthält:
- mindestens eine Einrichtung (4) zur durchgehenden Zufuhr eines Fadens (F),
- einen beweglichen Träger (2), der sich auf einem Gestell (1) gemäß einer geradlinigen Wechselbewegung zwischen einer angehobenen und einer angesenkten Stellung bewegen kann,
- mindestens eine Hohlnadel (5), die einen Kanal (53) mit einer Längsachse XX' aufweist, in dessen Innerem der Faden (F) zirkulieren kann, die mit einem ihrer Enden (51) an der Basis (22) des beweglichen Trägers (2) befestigt ist und an ihrem anderen Ende eine Spitze (52) aufweist, die in das Profilteil (P) aus Kautschuk eindringen kann,
- eine auf dem Gestell (1) angeordnete Schneideinrichtung (3), die eine Klinge (30) aufweist, die den aus der Spitze (52) der Nadel austretenden Faden (F) in jedem Zyklus der Wechselbewegung der Nadel durchschneiden kann, wenn die Spitze (52) in der angehobenen Stellung ist, um eine gegebene Fadenlänge freizugeben, die einen Vorlauf (A) am Ausgang der Nadel bildet,
**dadurch gekennzeichnet, dass** der bewegliche Träger Einrichtungen (6) enthält, die die Nadel um ihre Längsachse XX' in Drehung versetzen können, und dass die Spitze (52) der Nadel abgestumpft ist, so dass, wenn ein beliebiges radiales Profil der Spitze in Segmente einer Länge von 0,01 mm geschnitten wird, die Tangente an einem beliebigen Punkt eines gegebenen Segments (Sₖ) einen Winkel von weniger als 20° mit der Tangente an einem anderen beliebigen Punkt des Segments (Sₖ) und an einem beliebigen Punkt der dem betrachteten gegebenen Segment (Sₖ) benachbarten Segmente (Sₖ₋₁, Sₖ₊₁) bildet.

2. Vorrichtung nach Anspruch 1, wobei die die Kante (A) der Spitze (52) formende Linie im Wesentlichen in einer Ebene lotrecht zur Achse (XX') der Nadel (5) angeordnet ist.

3. Vorrichtung nach Anspruch 1 oder 2, wobei die Einrichtungen zum Drehen (6) der Nadel die Nadel mit einer Geschwindigkeit in Drehung versetzen können, die zwischen 5000 Umdrehungen pro Minute und 50 000 Umdrehungen pro Minute und üblicherweise zwischen 10 000 Umdrehungen pro Minute und 35 000 Umdrehungen pro Minute liegt.

4. Vorrichtung nach einem der Ansprüche 1 bis 3, wobei der Außendurchmesser der Nadel zwischen 0,7 mm und 3 mm liegt.

5. Vorrichtung nach einem der Ansprüche 1 bis 4, wobei die Schneideinrichtung (3) ein Messer (30) mit Wechselbewegung ist, das sich in einer Ebene verschiebt.

6. Vorrichtung nach einem der Ansprüche 1 bis 5, wobei die Schneideinrichtung (3) ausrückbar ist.

7. Vorrichtung nach einem der Ansprüche 1 bis 6, wobei die Nadel einer Blockiereinrichtung (51) des Fadens (F) zugeordnet ist, die auf dem beweglichen Träger (2) angeordnet ist und die Zirkulation des Fadens (F) in der Nadel (5) in einer Richtung entgegengesetzt zur Zufuhrrichtung verhindern kann.

8. Vorrichtung nach einem der Ansprüche 1 bis 7, wobei die Zufuhreinrichtung (4) mit einer Reguliereinrichtung verbunden ist, die den zwischen der Zufuhreinrichtung und dem Eintritt in den Kanal der Nadel befindlichen Fadenabschnitt unabhängig von der Stellung des beweglichen Trägers (2) auf einer Nullspannung halten kann.

9. Vorrichtung nach einem der Ansprüche 1 bis 8, die Einrichtungen zur Neigung der Richtung (XX') der Nadel (5) bezüglich des Gestells (1) aufweist.

10. Vorrichtung zum Einführen eines Fadens (F) oder mehrerer Fäden in ein Profilteil (P) aus Kautschuk gemäß einer gegebenen Richtung, die enthält
- einen beweglichen Träger (2), der sich auf einem Gestell (1) gemäß einer geradlinigen Wechselbewegung zwischen einer angehobenen und einer abgesenkten Stellung bewegen kann,
- eine Vielzahl von Hohlnadeln (5), die einen Kanal (53) mit einer Längsachse XX' aufweisen, in dessen Innerem ein Faden (F) zirkulieren kann, die je durch eines ihrer Enden (51) an der Basis (22) des beweglichen Trägers (2) befestigt sind und am anderen Ende eine Spitze (52) aufweisen, die in das Profilteil (P) aus Kautschuk eindringen kann,
- eine Vielzahl von Einrichtungen (4) für die Fadenzufuhr (F), die jede Nadel durchgehend speisen können,
- eine auf dem Gestell (1) angeordnete Schneideinrichtung (3), die eine Klinge (30) aufweist, die die aus der Spitze (52) jeder der Nadeln austretenden Fäden (F) in jedem Zyklus der Wechselbewegung zerschneiden kann, um eine gegebene Fadenlänge freizugeben, die einen Vorlauf (A) am Ausgang jeder der Nadeln bildet,
**dadurch gekennzeichnet, dass** der bewegliche Träger Einrichtungen (6) enthält, die die Nadeln je um ihre Längsachse XX' in Drehung versetzen können, und dass die Spitze (52) jeder der Nadeln abgestumpft ist, so dass, wenn ein beliebiges radiales Profil der Spitze in Segmente einer Länge von 0,01 mm zerschnitten wird, die Tangente an einem beliebigen Punkt eines gegebenen Segments (Sₖ) einen Winkel von weniger als 20° mit der Tangente an einem beliebigen Punkt der dem betrachteten gegebenen Segment (Sₖ) benachbarten Segmente (Sₖ₋₁, Sₖ₊₁) bildet.

11. Verfahren zum Einführen einer von einem Fadenabschnitt geformten Einlage (I) in ein Profilteil (P) aus Kautschuk über eine seiner Flächen (S) mit Hilfe einer Vorrichtung nach einem der Ansprüche 1 bis 10, die eine oder mehrere Nadeln enthält, wobei jede der Nadeln die Schritte ausführt, während denen:
A - wenn die Nadel in der angehobenen Stellung über der Fläche (S) des Profilteils (P) ist, eine gegebene Fadenlänge auf der Seite der Spitze (52) freigegeben wird, um einen Vorlauf (A) zu bilden,
B - die Spitze (52) der Nadel (5) abgesenkt wird, um die Spitze (52) der Nadel (5) in das Profilteil (P) über eine gegebene Tiefe (h) größer als die Länge des Vorlaufs eindringen zu lassen,
C - die Nadel (5) aus dem Profilteil (P) entnommen wird, indem die Zirkulation des Fadens (F) innerhalb der Nadel erlaubt wird,
D - die Spitze (52) der Nadel (5) um eine gegebene Höhe (d) über die Fläche (S) des Profilteils (P) angehoben wird, um eine Fadenlänge (d) zwischen der Spitze der Nadel (52) und der Fläche (S) des Profilteils (P) freizugeben,
E - der Faden im Bereich der Fläche (S) des Profilteils (P) mit Hilfe einer Schneideinrichtung (3) zerschnitten wird, um einen neuen Vorlauf (A) gegebener Länge (d) freizugeben,
**dadurch gekennzeichnet, dass** die Nadel um ihre Längsachse in Drehung versetzt wird.

12. Verfahren nach Anspruch 11, wobei die Nadel mit einer Geschwindigkeit zwischen 5000 Umdrehungen pro Minute und 50 000 Umdrehungen pro Minute in Drehung versetzt wird.

13. Verfahren nach Anspruch 11 oder 12, wobei am Ende des Schritts E:
F - das Profilteil (P) um einen gegebenen Schritt (e) bezüglich des Gestells verschoben wird, um das Einführen einer weiteren Einlage (I) durchzuführen.

14. Verfahren nach Anspruch 13, wobei die Schneideinrichtung ausgeschaltet wird, um den Schritt E auszulassen, und wobei die Spitze der Nadel über die Fläche (S) des Profilteils aus Kautschuk (P) um eine Höhe (d) im Wesentlichen gleich der Tiefe (h), zuzüglich der Länge des Schritts (e), angehoben wird, um einen neuen Vorlauf (A') zu formen.

## Claims

1. Device for embedding an insert (I) into a rubber profiled element (P) in a given direction, comprising:
- at least one means (4) for feeding a thread (F) continuously,
- a moving support (2) capable of moving on a structure (1) in a rectilinear reciprocating movement between a raised position and a lowered position,
- at least one hollow needle (5) comprising a channel (53) of longitudinal axis XX' inside which the thread (F) is able to run, which needle is fixed by one of its ends (51) to the base (22) of the moving support (2) and comprising at its other end a tip (52) capable of penetrating said rubber profiled element (P),
- a cutting means (3) arranged on the support (1), comprising a blade (30) capable of cutting off the thread (F) leaving the tip (52) of the needle on each cycle of the reciprocating movement of the needle, when said tip (52) is in a raised position so as to release a given length of thread constituting a tail (A) at the outlet of the needle,
**characterized in that** the moving support comprises means (6) capable of rotating the needle about its longitudinal axis XX', and **in that** the tip (52) of said needle is blunt such that, when cutting any radial profile of said tip into segments of 0.01 mm in length, the tangent at any point of a given segment (Sₖ) forms an angle of less than 20° with the tangent at any other point of said segment (Sₖ) and at any point of the segments (Sₖ₋₁, Sₖ₊₁) adjacent to the given segment (Sₖ) in question.

2. Device according to Claim 1, in which the line forming the edge (A) of the tip (52) is arranged substantially in a plane perpendicular to the axis (XX') of the needle (5).

3. Device according to Claim 1 or 2, in which the means (6) for rotating the needle are capable of rotating said needle at a speed of between 5000 revolutions/min and 50 000 revolutions/min and usually between 10 000 rev/min and 35 000 rev/min.

4. Device according to one of Claims 1 to 3, in which the outside diameter of the needle is between 0.7 mm and 3 mm.

5. Device according to one of Claims 1 to 4, in which the cutting means (3) is a knife (30) with a reciprocating movement moving in a plane.

6. Device according to one of Claims 1 to 5, in which the cutting means (3) is disengageable.

7. Device according to one of Claims 1 to 6, in which the needle is combined with a means (51) for immobilizing the thread (F) that is arranged on the moving support (2) and capable of preventing the thread (F) from running in the needle (5) in a direction opposite to the feed direction.

8. Device according to one of Claims 1 to 7, in which the feed means (4) is connected to a regulating means capable of maintaining the thread portion situated between said feed means and the inlet into the channel of the needle at a zero tension whatever the position of the moving support (2).

9. Device according to one of Claims 1 to 8, comprising means for inclining the direction (XX') of the needle (5) with respect to the structure (1).

10. Device for embedding a thread (F) or a plurality of threads into a rubber profiled element (P) in a given direction, comprising
- a moving support (2) capable of moving on a structure (1) in a rectilinear reciprocating movement between a raised position and a lowered position,
- a plurality of hollow needles (5) comprising a channel (53) of longitudinal axis XX' inside which a thread (F) is able to run, which needles are each fixed by one of their ends (51) to the base (22) of the moving support (2) and comprising at the other end a tip (52) capable of penetrating said rubber profiled element (P),
- a plurality of means (4) for feeding thread (F) capable of feeding each needle continuously,
- a cutting means (3) arranged on the structure (1), comprising a blade (30) capable of cutting off the threads (F) leaving the tip (52) of each of the needles on each cycle of the reciprocating movement, so as to release a given length of thread constituting a tail (A) at the outlet of each of the needles,
**characterized in that** the moving support comprises means (6) capable of rotating each of the needles about its longitudinal axis XX', and **in that** the tip (52) of each of the needles is blunt such that, when cutting any radial profile of said tip into segments of 0.01 mm in length, the tangent at any point of a given segment (Sₖ) forms an angle of less than 20° with the tangent at any point of the segments (Sₖ₋₁, Sₖ₊₁) adjacent to the given segment (Sₖ) in question.

11. Method of embedding an insert (I) formed by a thread portion into a rubber profiled element (P) via one of its surfaces (S), using a device according to one of Claims 1 to 10, comprising one or more needles, in which each of the needles describes the steps during which:
A - when the needle is in a raised position above the surface (S) of the profiled element (P), a given length of thread is released on the tip (52) side so as to constitute a tail (A),
B - the tip (52) of the needle (5) is lowered so as to cause the tip (52) of said needle (5) to penetrate the profiled element (P) to a given depth (h) which is greater than the length of the tail,
C - the needle (5) is extracted from the profiled element (P) while allowing the thread (F) to run inside the needle,
D - the tip (52) of the needle (5) is raised by a given height (d) above the surface (S) of the profiled element (P) so as to release a length (d) of thread between the tip of the needle (52) and the surface (S) of the profiled element (P),
E - the thread is cut off at the surface (S) of the profiled element (P) using a cutting means (3) so as to release a new tail (A) of given length (d),
**characterized in that** the needle is rotated about its longitudinal axis.

12. Method according to Claim 11, in which the needle is rotated at a speed of between 5000 revolutions/min and 50 000 revolutions/min.

13. Method according to Claim 11 or 12, in which, following step E:
F - the profiled element (P) is moved by a given pitch (e) with respect to the structure so as to embed another insert (I).

14. Method according to Claim 13, in which the cutting means is neutralized so as to eliminate step E, and in which the tip of the needle is raised above the surface (S) of the rubber profiled element (P) by a height (d) substantially equal to the depth (h), increased by the length of the pitch (e), so as to form a new tail (A').
